# EUROPÄISCHE PATENTANMELDUNG

(11) **EP 4 682 584 A1**
(43) Veröffentlichungstag der Anmeldung: **21.01.2026**
(21) Anmeldenummer: 25187892.2
(22) Anmeldetag: 07.07.2025
(51) Int. Cl.: G01S 7/4865, G01S 7/486, G01S 7/497, G01S 17/894

(54) **VERFAHREN ZUM BEREITSTELLEN MINDESTENS EINES KORREKTURWERTS FÜR EIN AUSGABEDISTANZBILD EINES LAUFZEITSENSORS, LAUFZEITSENSOR UND COMPUTERPROGRAMMPRODUKT**

(30) Priorität: 15.07.2024 DE 102024120052
(71) Anmelder: SICK AG, 79183 Waldkirch (DE)
(72) Erfinder: ERDMANN, Jennifer, 22969 Witzhave (DE)
(74) Vertreter: Manitz Finsterwald Patent- und Rechtsanwaltspartnerschaft mbB

(57) **Zusammenfassung**

In einer Ausführungsform weist ein Verfahren zum Bereitstellen mindestens eines Korrekturwerts für ein Ausgabedistanzbild eines Laufzeitsensors (10) folgende Schritte auf: Zuführen eines Einzelbildes, wobei ein, bevorzugt jeder, Datenpunkt (14) des Einzelbildes einen Distanzwert, eine Gesamtpeakhöhe und eine Gesamtpeakbreite umfasst, die jeweils aus einem von dem Laufzeitsensor (10) empfangenen Echosignal (S') durch mindestens zwei Detektorelemente (14a, 14b) ermittelt wurden; für mehrerer Datenpunkte, bevorzugt für jeden Datenpunkt (14), des Einzelbildes Ermitteln von mindestens zwei Einzelpeakhöhen in Abhängigkeit der Gesamtpeakhöhe und des Distanzwerts des jeweiligen Datenpunkts und Ermitteln von mindestens zwei Einzelpeakbreiten in Abhängigkeit der Gesamtpeakbreite und des Distanzwerts des jeweiligen Datenpunkts; für mehrerer Datenpunkte, bevorzugt für jeden Datenpunkt (14), des Einzelbildes Ermitteln jeweils eines distanzabhängigen Einzeldistanzkorrekturwerts für eines, bevorzugt für jedes, Detektorelement (14a, 14b) auf Basis der Einzelpeakhöhe oder auf Basis der Einzelpeakhöhe und der Einzelpeakbreite und Bereitstellen eines Gesamtdistanzkorrekturwerts des jeweiligen Datenpunkts als Funktion der Einzeldistanzkorrekturwerte.

## Beschreibung

Die vorliegende Erfindung betrifft ein Verfahren zum Bereitstellen mindestens eines Korrekturwerts für ein Ausgabedistanzbild eines Laufzeitsensors, einen Laufzeitsensor und ein Computerprogrammprodukt.

Laufzeitsensoren werden dazu eingesetzt, Distanzmessungen durchzuführen. Je nach Ausführungsform des Sensors kommen beispielsweise optische Signale zum Einsatz, welche in sogenannten LiDAR-Sensoren (englisch: Light Detection and Ranging) für die Messung verwendet werden. Die Entfernung eines Objekts in der Umgebung des Sensors wird durch eine Messung der Laufzeit (englisch: Time of Flight) bestimmt. Bei dieser Messung sendet ein LiDAR-Sensor ein Sendesignal, beispielsweise ein gepulstes Lasersignal, aus, welches an dem Objekt reflektiert wird. Die reflektierten Pulse werden in Form eines Echosignals von dem Sensor detektiert. Auf Basis dieses Echosignals bestimmt der Sensor die Laufzeit der Pulse von dem Sensor zum Objekt und zurück und errechnet daraus die Distanz des Objekts.

Eine Genauigkeit der von einem LiDAR-Sensor bereitgestellten Distanzwerte hängt von unterschiedlichen Faktoren bzw. Effekten ab. Beispielsweise beeinflusst eine Reflektivität eines Objekts oder Targets, ein Rauschen in der Umgebung des Sensors, auch bezeichnet als Rauschboden, sowie eine Implementierung der Empfängereinheit des Sensors das Messergebnis, vor allem dessen Qualität und Genauigkeit. Üblicherweise werden zur Detektion des Echosignals Fotodioden, bevorzugt Lawinenfotodioden (englisch: Avalanche Photodiodes, APD), besonders bevorzugt Einzelphotonen-Lawinenfotodioden (englisch: Single Photon Avalanche Diodes, SPADs) eingesetzt. Diese ermöglichen eine Zählung der auf ihrer Fläche eintreffenden Photonen, insbesondere eine Einzelphotonenzählung. Der Einsatz von SPADs, bei denen durch Auftreffen eines einzelnen Photons ein Lawinendurchbruch ausgelöst wird, bedingt allerdings gewisse Totzeiteffekte, die eine Folge des Wiedervorspannens der SPAD nach einem Lawinendurchbruch sind. Zudem ist es üblich, mehrere SPADs oder APDs zu verschalten, so dass das gemeinsame Ausgangssignal der verschalteten Dioden ein Pixel oder einen Datenpunkt eines von dem Sensor auszugebenden Distanzbildes ergibt.

Die Einflüsse während der Laufzeitmessung sowie die Architektur der Empfängereinheit eines LiDAR-Sensors führen unter Umständen zu einer Verzerrung der detektierten Peakform eines Laserpulses. Da der Sensor die Distanzberechnung auf Basis dieser Peakform durchführt, kommt es zu einem sogenannten Walk Error, welcher die Distanzgenauigkeit des Sensors beeinträchtigt. Der Walk Error bezeichnet einen gemessenen systematischen Distanzfehler, der durch Peakverzerrungen zustande kommt.

LiDAR-Sensoren aus dem Stand der Technik korrigieren diesen Walk Error distanzunabhängig, also unabhängig von der Entfernung zwischen Sensor und Target. Hierbei kommen beispielsweise Nachschlagetabellen (englisch: Look-up Tables) zum Einsatz, die anhand der gemessenen Peakhöhe und Peakbreite die auf deren Basis ermittelte Distanz korrigieren. Bei diesem Modell wird davon ausgegangen, dass der Walk Error unabhängig von der Distanz zum Target ist.

In vielen LiDAR-Sensoren sind Sender und Empfänger nicht auf der gleichen optischen Achse angeordnet, was zu einer gewissen, nicht vernachlässigbaren Parallaxe führt. Demzufolge ist eine Position des Laserspots auf dem Receiver abhängig von der Entfernung eines Objekts. Sobald mehrere Fotodioden zu einem Pixel verschaltet werden, beeinflusst die Parallaxe den Walk Error, indem sie eine Verschiebung des mit dem Echosignal erhaltenen Laserstrahls, bzw. seiner Impulse, auf den beispielsweise in Form eines Arrays verschalteten Dioden bewirkt. Dadurch empfangen diese Dioden nicht mehr die gleiche optische Leistung. Vor allem verändert sich das Verhältnis der optischen Leistungen auf den zu einem Pixel verschalteten Fotodioden in nicht vernachlässigbarer Weise mit der Distanz eines Targetobjekts. Eine Korrektur des sich daraus ergebenden Messfehlers gemäß der distanzunabhängigen Walk Error Correction aus dem Stand der Technik führt bei bestimmten Distanzen zu einem Restfehler, der zum Beispiel bis zu 15 cm betragen kann.

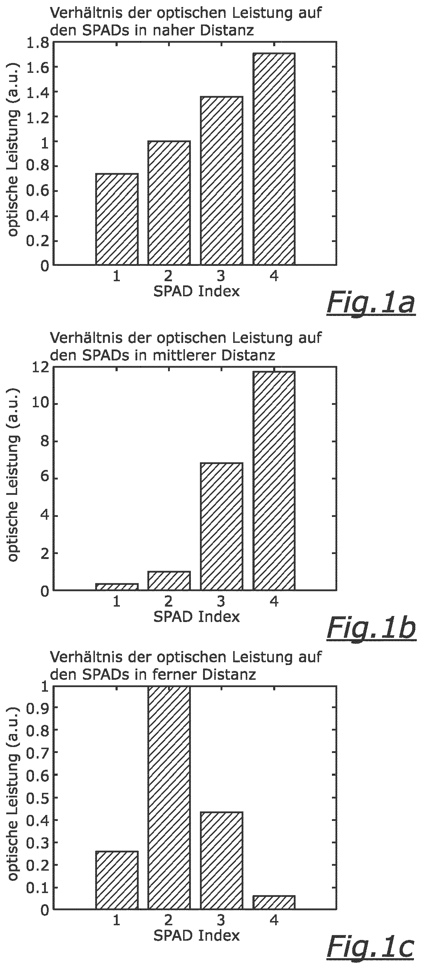

Das beschriebene Problem der distanzabhängigen Variation der optischen Leistung auf zu einem Pixel verschalteten Fotodioden wird anhand der Grafiken der Fig. 1a, 1b und 1c verdeutlicht. In diesem Beispiel werden vier SPADs, die mit dem Index 1, 2, 3, 4 bezeichnet werden, in Form eines Arrays, also nebeneinander angeordnet, verschaltet. Für jede SPAD des Arrays wird die optische Leistung, also die optische Energie, die auf der Oberfläche der betreffenden SPAD ankommt, in Milliwatt, dargestellt. Fig. 1a zeigt die optischen Leistungen der SPADs und deren Verhältnis in naher Distanz, während Fig. 1b die Verhältnisse bei mittlerer Distanz zeigt und Fig. 1c die Verhältnisse bei einer fernen Distanz darstellt. Es ist deutlich zu erkennen, dass die optischen Leistungen auf den SPADs und insbesondere die Verhältnisse der optischen Leistungen der einzelnen SPADs untereinander, distanzabhängig stark variieren. Besteht nun ein Pixel aus den dargestellten vier SPADs, ergeben sich distanzabhängig andere Pulsformen, die nicht mit einer distanzunabhängigen Nachschlagetabelle zufriedenstellend korrigiert bzw. kompensiert werden können. Während bei der nahen Distanz, wie aus Fig. 1a ersichtlich, alle vier SPADs ähnlich stark bestrahlt werden, treten sowohl bei der mittleren Distanz als auch bei der fernen Distanz bereits große Unterschiede zwischen den einzelnen SPADs auf, weil beispielsweise das jeweils am stärksten beleuchtete SPAD bereits sättigt, während sich das am schwächsten beleuchtete SPAD noch im linearen Bereich befindet. Werden nun alle Distanzen mit derselben Tabelle korrigiert, verbleiben die oben beschriebenen Restfehler.

Um diesem Problem zu begegnen, könnte für alle Distanzen jeweils eine Korrekturtabelle auf Basis von Kalibrationsmessungen eingesetzt werden. Die Erstellung dieser Vielzahl von Tabellen ist jedoch zeitaufwändig und komplex.

Es ist daher eine Aufgabe der Erfindung, ein Verfahren zum Bereitstellen mindestens eines Korrekturwerts für ein Ausgabedistanzbild eines Laufzeitsensors, sowie einen Laufzeitsensor anzugeben, wodurch die Distanzgenauigkeit eines Laufzeitsensors weiter verbessert wird. Insbesondere besteht eine Aufgabe darin, ein Verfahren und einen Laufzeitsensor anzugeben, welche eine Korrektur eines distanzabhängigen Walk Errors, der beispielsweise durch die Parallaxe des Empfängers des Sensors bei Verwendung mehrerer Fotodioden für ein Pixel entsteht, ermöglicht.

Diese Aufgabe wird gelöst durch ein Verfahren gemäß Anspruch 1, durch den Laufzeitsensor gemäß Anspruch 13 und durch das Computerprogrammprodukt des Anspruchs 14.

In einer Ausführungsform weist ein Verfahren zum Bereitstellen mindestens eines Korrekturwerts für ein Ausgabedistanzbild eines Laufzeitsensors folgende Schritte auf:
- Zuführen eines Einzelbildes, wobei ein, bevorzugt jeder, Datenpunkt des Einzelbildes einen Distanzwert, eine Gesamtpeakhöhe und eine Gesamtpeakbreite umfasst, die jeweils aus einem von dem Laufzeitsensor empfangenen Echosignal durch mindestens zwei Detektorelemente ermittelt wurden,
- für mehrere Datenpunkte, bevorzugt für jeden Datenpunkt, des Einzelbildes Ermitteln von mindestens zwei Einzelpeakhöhen in Abhängigkeit der Gesamtpeakhöhe und des Distanzwerts des jeweiligen Datenpunkts und Ermitteln von mindestens zwei Einzelpeakbreiten in Abhängigkeit der Gesamtpeakbreite und des Distanzwerts des jeweiligen Datenpunkts,
- für mehrere Datenpunkte, bevorzugt für jeden Datenpunkt, des Einzelbildes Ermitteln jeweils eines distanzabhängigen Einzeldistanzkorrekturwerts für ein, bevorzugt für jedes, Detektorelement auf Basis der Einzelpeakhöhe oder auf Basis der Einzelpeakhöhe und der Einzelpeakbreite und Bereitstellen eines Gesamtdistanzkorrekturwerts des jeweiligen Datenpunkts als Funktion der Einzeldistanzkorrekturwerte.

Das vorgeschlagene Verfahren ermittelt also den Gesamtdistanzkorrekturwert eines Datenpunkts oder Pixels in Abhängigkeit von Einzeldistanzkorrekturwerten, die separat für bevorzugt jedes Detektorelement eines Datenpunkts, beispielsweise eine Lawinenfotodiode oder eine Einzelphotonen-Lawinenfotodiode, ermittelt wurden. Dazu wird zuerst die aus dem Echosignal pro Datenpunkt ermittelte Gesamtpeakhöhe bezogen auf den grob ermittelten Distanzwert des Datenpunkts in jeweils eine Einzelpeakhöhe pro Detektorelement des Datenpunkts aufgeteilt. Analog dazu wird die im Laufzeitsensor verfügbare Gesamtpeakbreite bezogen auf den Distanzwert in jeweils eine Einzelpeakbreite pro Detektorelement des Datenpunkts aufgeteilt. Nun wird für jedes Detektorelement auf Basis der für dieses Element ermittelten Einzelpeakhöhe und Einzelpeakbreite ein Einzeldistanzkorrekturwert ermittelt. Durch Verknüpfen der Einzeldistanzkorrekturwerte wird der Gesamtdistanzkorrekturwert bestimmt. Mit diesem kann der in der Messung bestimmte Distanzwert des Einzelbildes nachträglich korrigiert werden und das Ausgabedistanzbild mit dem korrigierten Distanzwert bereitgestellt werden.

Dadurch, dass das erfindungsgemäße Verfahren vorzugsweise für jedes Detektorelement, also beispielsweise jede SPAD oder APD, eines Datenpunkts einen Einzeldistanzkorrekturwert ermittelt, kann der distanzabhängige Walk Error, der beispielsweise durch die Architektur des Laufzeitsensors, vor allem die Anordnung von mehreren Detektorelementen, die einen Datenpunkt bilden, im Empfänger des Sensors verursacht wird, kompensiert werden. Die Distanzgenauigkeit des Sensors wird erhöht.

Gemäß einer Weiterbildung ist die Gesamtpeakbreite eines, bevorzugt eines jeden, Datenpunkts eine Funktion mindestens zweier Peakbreiten, die von den mindestens zwei Detektorelementen des Laufzeitsensors, die dem jeweiligen Datenpunkt zugeordnet sind, aus dem Echosignal detektiert wurden. Die Gesamtpeakhöhe eines, bevorzugt eines jeden, Datenpunkts ist eine Funktion mindestens zweier Peakhöhen, die von den mindestens zwei Detektorelementen des Laufzeitsensors, die dem jeweiligen Datenpunkt zugeordnet sind, aus dem Echosignal detektiert wurden.

Im Normalbetrieb bzw. Regelbetrieb eines Laufzeitsensors sind lediglich Gesamtpeakbreite und Gesamtpeakhöhe eines Datenpunkts bzw. Pixels, die jeweils aus dem Echosignal gemessen bzw. ermittelt wurden, bekannt bzw. zugreifbar. Die Gesamtpeakhöhe setzt sich aus den von jedem Detektorelement des Datenpunkts detektierten Peakhöhen zusammen. Beispielsweise ist die Gesamtpeakhöhe die Summe der Peakhöhen aller Detektorelemente des Datenpunkts. In ähnlicher Art und Weise setzt sich die Gesamtpeakbreite des Datenpunkts aus den in den Detektorelementen dieses Datenpunkts erfassten Peakbreiten zusammen.

Gemäß einer Weiterbildung erfolgt das Ermitteln der mindestens zwei Einzelpeakhöhen in Abhängigkeit der Gesamtpeakhöhe und des Distanzwerts des jeweiligen Datenpunkts auf Basis einer ersten Tabelle. Das Ermitteln der mindestens zwei Einzelpeakbreiten erfolgt in Abhängigkeit der Gesamtpeakbreite und des Distanzwerts des jeweiligen Datenpunkts auf Basis einer zweiten Tabelle. Jedem Detektorelement wird eine ermittelte Einzelpeakhöhe und eine ermittelte Einzelpeakbreite zugeordnet.

Da, wie beschrieben, im Normalbetrieb lediglich auf die Gesamtpeakhöhe und die Gesamtpeakbreite eines Datenpunkts zugegriffen werden kann, wird unter Verwendung der ersten und der zweiten Tabelle für vorzugsweise jedes Detektorelement des Datenpunkts eine Einzelpeakhöhe und eine Einzelpeakbreite für den grob gemessenen Distanzwert bestimmt. Mit anderen Worten werden anhand der Gesamtpeakhöhe und der groben Distanz des Peaks die Einzelpeakhöhen der Peaks der einzelnen Fotodioden, beispielsweise SPADs, bestimmt. Diese theoretischen Einzelpeakhöhen entsprechen dabei weitestgehend den von den Detektorelementen gemessenen Peakhöhen, die aber nicht einzeln zugreifbar sind. Die zweite Tabelle erlaubt eine Bestimmung der Einzelpeakbreiten der Einzel-SPADs eines Datenpunkts zu einer jeweiligen Gesamtpeakbreite und groben Distanz des Peaks des Datenpunkts.

In einer Ausführung wird die Gesamtpeakhöhe vor dem Bestimmen der Einzelpeakhöhen zusätzlich in eine Rauschboden-bereinigte und Rauschboden-normierte Gesamtpeakhöhe umgewandelt, um den Rauschboden und Sättigungseffekte herauszurechnen. Dazu wird ein Wert für den Rauschboden von der Gesamtpeakhöhe subtrahiert und ins Verhältnis gesetzt zu einer Differenz aus einer maximalen Peakhöhe und dem Rauschbodenwert.

Gemäß einer Weiterbildung wird der Gesamtdistanzkorrekturwert des jeweiligen Datenpunkts als Mittelwert der Einzeldistanzkorrekturwerte bereitgestellt. Bevorzugt wird er als gewichteter Mittelwert der Einzeldistanzkorrekturwerte bereitgestellt. Besonders bevorzugt wird der Gesamtdistanzkorrekturwert als nach den Einzelpeakhöhen oder Einzelpeakbreiten gewichteter Mittelwert der Einzeldistanzkorrekturwerte bereitgestellt.

Vorteilhafterweise wird erfindungsgemäß bei der Ermittlung des Gesamtdistanzkorrekturwerts die Architektur des Empfängers des Laufzeitsensors durch die unterschiedliche Gewichtung der Einzeldistanzkorrekturwerte berücksichtigt.

Gemäß einer Weiterbildung erfolgt das Ermitteln des jeweiligen distanzabhängigen Einzeldistanzkorrekturwerts für das jeweilige Detektorelement eines Datenpunkts auf Basis der Einzelpeakhöhe oder auf Basis der Einzelpeakhöhe und der Einzelpeakbreite unter Verwendung einer dritten Tabelle.

Als dritte Tabelle kommt beispielsweise eine aus dem Stand der Technik bekannte Tabelle zum Einsatz, die einer Peakhöhe einen Korrekturwert zuweist oder einer Kombination aus Peakhöhe und Peakbreite einen Korrekturwert zuweist. Sofern die Einzelpeakhöhe unterhalb einer Sättigungsgrenze liegt, wird zur Ermittlung des Einzeldistanzkorrekturwerts lediglich die Einzelpeakhöhe herangezogen. Sofern die Einzelpeakhöhe eine Sättigungsgrenze erreicht oder überschreitet, wird die Einzelpeakbreite ergänzend herangezogen, um den Einzeldistanzkorrekturwert aus der dritten Tabelle zu bestimmen. Dem liegt die Erfahrung zugrunde, dass die optische Leistung auf der Detektorfläche einer Fotodiode nicht sättigen kann, die von der APD oder SPAD ermittelten Zählerstände oder Counts der Photonen jedoch schon in die Sättigung geraten können.

Gemäß einer Weiterbildung wird genau ein Einzeldistanzkorrekturwert für die mindestens zwei Detektorelemente eines Datenpunkts ermittelt, sofern sich die mindestens zwei Einzelpeakhöhen eines Datenpunkts nicht wesentlich unterscheiden.

Ergibt sich aus den ermittelten Einzelpeakhöhen, dass die Detektorelemente, die einen Datenpunkt bilden, distanzunabhängig mit einer annähernd gleichen optischen Leistung bestrahlt wurden, so ist es nicht erforderlich, für jedes Detektorelement einen Einzeldistanzkorrekturwert zu ermitteln. Dadurch wird bei der Bestimmung des Gesamtdistanzkorrekturwerts Rechenzeit und Rechenleistung eingespart.

In einer weiteren Ausführungsform umfasst das Verfahren zusätzlich:
- Erfassen einer jeweiligen Stärke des Umgebungsrauschens durch eines, bevorzugt jedes, Detektorelement des jeweiligen Datenpunkts,
wobei die jeweils erfasste Stärke des Umgebungsrauschens beim Ermitteln des jeweiligen Einzeldistanzkorrekturwerts zusätzlich herangezogen wird.

Hierfür werden die erste und/oder die zweite Tabelle jeweils um eine Dimension, nämlich von Werten für die Stärke des Umgebungsrauschens, erweitert. Dadurch wird bei der Bestimmung der Einzeldistanzkorrekturwerte der Rauschboden des Datenpunkts berücksichtigt. Besonders vorteilhaft ist dies bei LiDAR-Sensoren, die sehr rauschabhängig sind, d.h. bei denen die Abhängigkeit der Gesamtpeakhöhe, also der Gesamtintensität eines Datenpunkts, und/oder der Gesamtpeakbreite im Verhältnis zu den Detektorelementen stark rauschabhängig ist.

In einer weiteren Ausführungsform weist das Verfahren des Weiteren folgende Schritte auf, die vorab für mehrere, bevorzugt für alle, einem Datenpunkt zugeordneten Detektorelemente und für mehrere Datenpunkte, bevorzugt für jeden Datenpunkt, durchgeführt werden:
- Bestimmen jeweils eines Einzeldistanzkorrekturwerts für eine von dem Detektorelement ermittelte Peakhöhe und Peakbreite und
- Erstellen der dritten Tabelle, die jeder erfassten Kombination von Peakhöhe und Peakbreite den bestimmten Einzeldistanzkorrekturwert zuordnet.

Die Schritte dieser Ausführungsform werden zur Kalibration des Laufzeitsensors vorab durchgeführt, d.h. vor Aufnahme des Normalbetriebs des Sensors, in welchem das erfindungsgemäße Verfahren zum Bereitstellen des Korrekturwerts ausgeführt wird. Dafür wird der Laufzeitsensor so konfiguriert, dass jedes Detektorelement einzeln eine Peakhöhe und Peakbreite aus dem empfangenen Echosignal ausgibt. Ein Objekt wird nun bei einer bestimmten, bekannten Distanz vom Laufzeitsensor positioniert. Aus Vergleich der bekannten Distanz mit der von dem Detektorelement auf Basis der Peakhöhe und Peakbreite ermittelten Distanz wird der Einzeldistanzkorrekturwert bestimmt. Auf diese Weise wird eine Detektorelement-bezogene Walk-Error-Kalibration für die bestimmte Distanz eingemessen und kalibriert. Anders ausgedrückt werden verschiedene Targets in verschiedenen Distanzen vermessen. Eine jeweilige Differenz zur Ground Truth Distanz wird in Abhängigkeit von Peakhöhe und/oder Peakbreite als Einzeldistanzkorrekturwert in der dritten Tabelle festgehalten.

Die Distanzabhängigkeit des Gesamtdistanzkorrekturwerts wird also unter Anderem dadurch erreicht, dass bei der Ermittlung der Einzelpeakhöhen und Einzelpeakbreiten auf Basis der Gesamtpeakhöhe und der grob gemessenen Distanz die Anordnung der Detektorelemente, insbesondere die Parallaxe des Empfängers des Laufzeitsensors, berücksichtigt wird.

In einer weiteren Ausführungsform weist das Verfahren außerdem folgende Schritte auf, die vorab für mehrere, bevorzugt für alle, einem Datenpunkt zugeordneten Detektorelemente durchgeführt werden:
- Bestimmen jeweils eines distanzabhängigen Faktors, der einer Abhängigkeit der ermittelten Peakhöhe von der optischen Leistung bezogen auf eine Position des jeweiligen Detektorelements im Verhältnis zur Position mindestens eines zweiten Detektorelements desselben Datenpunkts entspricht,
- Bestimmen einer distanzunabhängigen Funktion der ermittelten Peakhöhe von der optischen Leistung,
- Ermitteln einer distanzabhängigen Funktion der ermittelten Peakhöhe von der optischen Leistung durch Multiplikation der jeweiligen bestimmten distanzunabhängigen Funktion mit dem distanzabhängigen Faktor,
wobei das Verfahren des Weiteren folgende Schritte aufweist, die vorab für mehrere Datenpunkte, bevorzugt für jeden Datenpunkt, durchgeführt werden:
- Ermitteln einer distanzabhängigen Funktion der Gesamtpeakhöhe des jeweiligen Datenpunkts von der optischen Leistung auf Basis der distanzabhängigen Funktionen der Peakhöhen von der optischen Leistung der dem jeweiligen Datenpunkt zugeordneten Detektorelemente, insbesondere durch Aufsummieren derselben, und
- Erstellen der ersten Tabelle auf Basis der ermittelten distanzabhängigen Funktion der Gesamtpeakhöhe des jeweiligen Datenpunkts von der optischen Leistung und der jeweiligen distanzabhängigen Funktion der Peakhöhe von der optischen Leistung eines jeden dem Datenpunkt zugeordneten Detektorelements, wobei die erste Tabelle jeder erfassten Kombination von Gesamtpeakhöhe und Distanzwert des jeweiligen Datenpunkts jeweilige Einzelpeakhöhen der dem Datenpunkt zugeordneten Detektorelemente zuordnet.

Um das distanzabhängige Verhältnis der optischen Leistung auf den einzelnen Detektorelementen eines Datenpunkts zu messen, wird auch in dieser Ausführungsform der Laufzeitsensor so konfiguriert, dass der Output eines Detektorelements, also die Peakhöhe und die Peakbreite, abgegriffen werden kann. Um den distanzabhängigen Faktor zu bestimmen, wird ein Objekt oder Target in der Distanz relativ zum Laufzeitsensor verschoben. Bei jeder Distanz wird das Verhältnis der von einem Detektorelement ermittelten Peakhöhe in Funktion der optischen Leistung bezogen auf die Position des Detektorelements im Vergleich zu den übrigen Detektorelementen, mit denen es im anschließenden Normalbetrieb zu einem Datenpunkt zusammengefasst wird, bestimmt. Damit keines der Detektorelemente in die Sättigung gerät, wird vorzugsweise ein schwach reflektives Target verwendet. Ergänzend kann auch ein Neutrale-Dichte-Filter (ND-Filter) eingesetzt werden, um Sättigungseffekte und damit ein Verzerren der Verhältnisse zu verhindern. Die Figuren 1a, 1b, und 1c zeigen zur Verdeutlichung beispielhaft jeweils ein Diagramm des Verhältnisses der optischen Leistung auf den Detektorelementen in einer bestimmten Distanz. In diesem Beispiel werden vier Detektorelemente, hier SPADs, zu einem Datenpunkt zusammengefasst. Die Detektorelemente werden mit den Indizes 1 bis 4 bezeichnet. Fig. 1a zeigt das Verhältnis der optischen Leistungen in naher Distanz, während Fig. 1b diese bei mittlerer Distanz und Fig. 1c diese bei ferner Distanz zeigen. Es ist zu erkennen, dass bei mittlerer Distanz das am stärksten beleuchtete Detektorelement 4 bereits sättigt, während sich das schwächste SPAD 1 noch im linearen Bereich befindet. Bei jeder Distanz ergeben sich andere Verhältnisse der optischen Leistungen auf den einzelnen Detektorelementen, die sich in den gezeigten unterschiedlichen Peakformen niederschlagen. Aus diesen Messungen werden jeweils die distanzabhängigen Faktoren bestimmt.

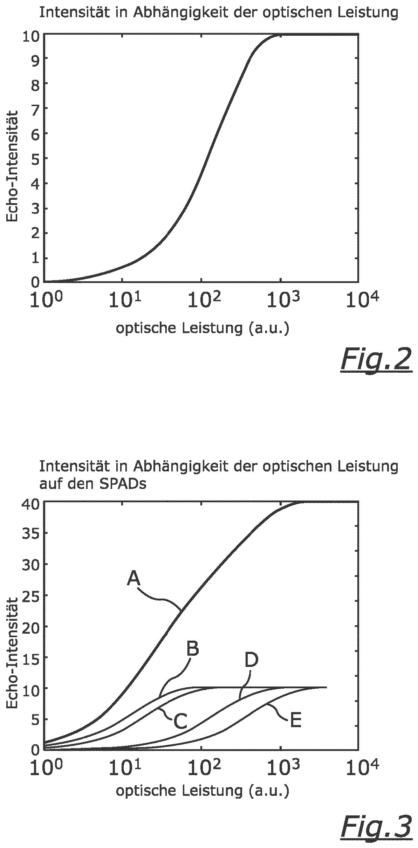

Zum Bestimmen der distanzunabhängigen Funktion der ermittelten Peakhöhe von der optischen Leistung wird der Laufzeitsensor weiterhin in der Einzel-SPAD-Konfiguration belassen. Ein Target wird bei einer konstanten Distanz positioniert und mehrfach vermessen, wobei jeweils die optische Leistung auf den Detektorelementen mit Hilfe von ND-Filtern beispielsweise variiert wird. Zum Erreichen der Variation der optischen Leistung auf den SPADs kann ein stark reflektives Target in Verbindung mit unterschiedlichen geeichten ND-Filterscheiben verwendet werden oder es werden bei der gleichen Distanz verschiedene schwächere Targets mit geeigneten Reflektivitäten eingesetzt. Es ergibt sich somit die in Fig. 2 dargestellte Funktion der Peakhöhe, hier bezeichnet als Echointensität, von der relativen optischen Leistung.

Zum Ermitteln der distanzabhängigen Funktion der ermittelten Peakhöhe von der optischen Leistung wird die beschriebene und in Fig. 2 beispielhaft dargestellte distanzunabhängige Funktion jeweils mit dem distanzabhängigen Faktor des Detektorelements multipliziert. Dadurch ergeben sich die in Fig. 3 beispielhaft dargestellten distanzabhängigen Funktionen für einen Datenpunkt, der hier beispielsweise aus vier Detektorelementen gebildet wird. Die mit A bezeichnete Kurve entspricht der Gesamtpeakhöhe in Funktion der optischen Leistung und ist hier die Summe der mit B, C, D und E bezeichneten Peakhöhen der vier Detektorelemente. Dabei wurde die Kurve B für das erste Detektorelement erstellt durch Multiplikation der distanzunabhängigen Funktion der Peakhöhe von der optischen Leistung beispielsweise aus Fig. 2 mit dem für dieses Detektorelement ermittelten distanzabhängigen Faktor, der hier beispielsweise 12 beträgt. Die Kurve C wurde für das zweite Detektorelement des Datenpunkts in ähnlicher Art und Weise erstellt, wobei hier der distanzabhängige Faktor 7 verwendet wurde. Die Kurve D entspricht einer Multiplikation der Kurve aus Fig. 2 mit dem distanzabhängigen Faktor 1. Für die Kurve E wurde der distanzabhängige Faktor 0,36 ermittelt und verwendet.

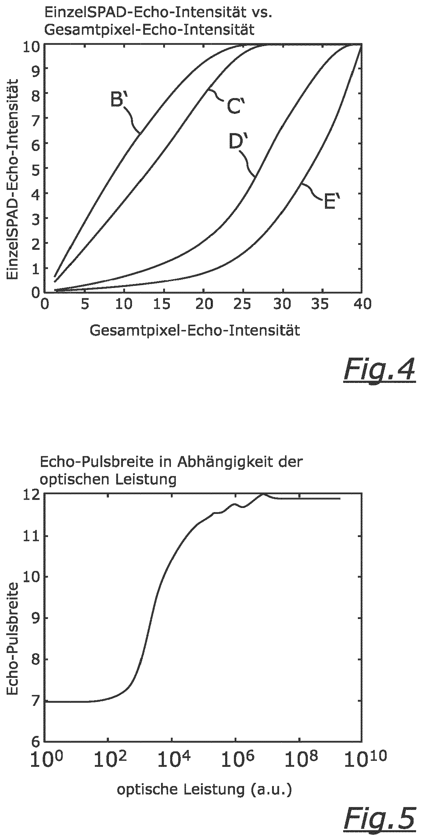

Nun wird die erste Tabelle erstellt auf Basis der wie oben beschrieben gewonnenen distanzabhängigen Funktionen. In einem weiteren Schritt wird eine Aufstellung der Peakhöhen B, C, D und E der jeweiligen Detektorelemente bezogen auf die Gesamtpeakhöhe A, erstellt. Dies ist beispielhaft in Fig. 4 dargestellt. Auf der X-Achse ist hier die Gesamtpeakhöhe aufgetragen, während die Y-Achse die Peakhöhen der einzelnen Detektorelemente zeigt. Die so erhaltenen auf die Gesamtpeakhöhe bezogenen Kurven sind mit B', C', D' und E' bezeichnet. Auf Basis der in Fig. 3 beziehungsweise Fig. 4 gezeigten Funktionen wird die erfindungsgemäße erste Tabelle erstellt. Ein Beispiel für die erste Tabelle hat folgenden Aufbau:

**1. Tabelle**

| | Gesamtpeakhöhe | 10 | 20 | 30 | 40 |
|---|---|---|---|---|---|
| Distanz | | | | | |
| 0m | | [2.5,2.5,2.5,2.5] | [5,5,5,5] | [7.5,7.5,7.5,7.5] | [10,10,10,10] |
| 10m | | [1,2,5,2] | [3,4,9,4] | [5,7.5,10,7.5] | [10,10,10,10] |
| 20m | | [1,2,3,4] | [3,4,6,7] | [6,7,8,9] | [10,10,10,10] |
| 30m | | [1,2,3.5,3.5] | [3,5,6,6] | [4.5,7.5,9,9] | [10,10,10,10] |
| 40m | | [1.5,3.5,3.5,1.5] | [4,6,6,4] | [7,8,8,7] | [10,10,10,10] |
| 50m | | [1,4,4,1] | [3,7,7,3] | [6,9,9,6] | [10,10,10,10] |

Es handelt sich um eine 2D-Nachschlagetabelle, die jeweils für eine Gesamtpeakhöhe und einer Distanz eines Pixel-Peaks die Einzelpeakhöhen der Einzel-SPADs wiedergibt. Gemäß einer Weiterbildung wird zwischen den einzelnen Werten der Tabelle zweidimensional interpoliert, wodurch sich die Genauigkeit noch weiter verbessert.

Die beschriebenen Schritte werden vorzugsweise für viele Distanzen wiederholt, um für jede dieser Distanzen Tabelleneinträge zu kalibrieren.

**In** einer weiteren Ausführungsform weist das Verfahren folgende Schritte auf, die vorab für mehrere, bevorzugt für alle, einem Datenpunkt zugeordneten Detektorelemente durchgeführt werden:
- Bestimmen jeweils eines distanzabhängigen Faktors, der eine Abhängigkeit der ermittelten Peakbreite von der optischen Leistung bezogen auf eine Position des jeweiligen Detektorelements im Verhältnis zur Position mindestens eines zweiten Detektorelements desselben Datenpunkts entspricht,
- Bestimmen einer distanzunabhängigen Funktion der ermittelten Peakbreite von der optischen Leistung,
- Bestimmen einer distanzabhängigen Funktion der ermittelten Peakbreite von der optischen Leistung durch Multiplikation der jeweiligen bestimmten distanzunabhängigen Funktion mit dem distanzabhängigen Faktor,
wobei das Verfahren in dieser Ausführungsform des Weiteren folgende Schritte aufweist, die vorab für mehrere Datenpunkte, bevorzugt für jeden Datenpunkt, durchgeführt werden:
- Ermitteln einer distanzabhängigen Funktion der Gesamtpeakbreite des jeweiligen Datenpunkts von der optischen Leistung in Abhängigkeit der distanzabhängigen Funktion der Peakbreite von der optischen Leistung mehrerer, bevorzugt aller, dem jeweiligen Datenpunkt zugeordneten Detektorelemente und
- Erstellen der zweiten Tabelle auf Basis der ermittelten distanzabhängigen Funktion der Gesamtpeakbreite des jeweiligen Datenpunkts von der optischen Leistung und der jeweiligen distanzabhängigen Funktion der Peakbreite von der optischen Leistung mehrerer, bevorzugt aller, dem Datenpunkt zugeordneten Detektorelemente, wobei die zweite Tabelle jeder erfassten Kombination von Gesamtpeakbreite und Distanzwert des jeweiligen Datenpunkts eine jeweilige Einzelpeakbreiten der dem Datenpunkt zugeordneten Detektorelemente zuordnet.

Analog zu den oben beschriebenen Schritten zum Erstellen der ersten Tabelle, die einer Gesamtpeakhöhe jeweils mehrere distanzabhängige Einzelpeakhöhen zuordnet, wird die zweite Tabelle vor Ausführen des Normalbetriebs des Laufzeitsensors in einer Kalibrierungsphase erstellt. Nach dem Bestimmen eines jeweiligen distanzabhängigen Faktors für ein Detektorelement wird die distanzunabhängige Funktion der Peakbreite von der optischen Leistung bestimmt. Dazu wird ein Target bei einer konstanten Distanz zum Laufzeitsensor mehrfach vermessen, wobei zwischen den Messungen die optische Leistung variiert wird, beispielsweise durch Einsatz geeigneter geeichter ND-Filter oder Variation der Reflektivität des Targets. Damit erhält man eine Kurve, wie in Fig. 5 gezeigt, die die relative Verstärkung oder Abschwächung der optischen Leistung auf einem Detektorelement widerspiegelt. Es werden also hier die gemessenen Peakbreiten eines Detektorelements über der relativen optischen Leistung aufgetragen.

Analog zur Fig. 3 erhält man durch Multiplikation der Kurve aus Fig. 5 mit den jeweiligen distanzabhängigen Faktoren der Detektorelemente die Kurven der Fig. 6. Fig. 6 zeigt beispielhaft distanzabhängige Funktionen F, G, H, I der jeweiligen Peakbreite von vier Detektorelementen, die im anschließenden Normalbetrieb zu einem Datenpunkt zusammengefasst werden, im Verhältnis zur optischen Leistung.

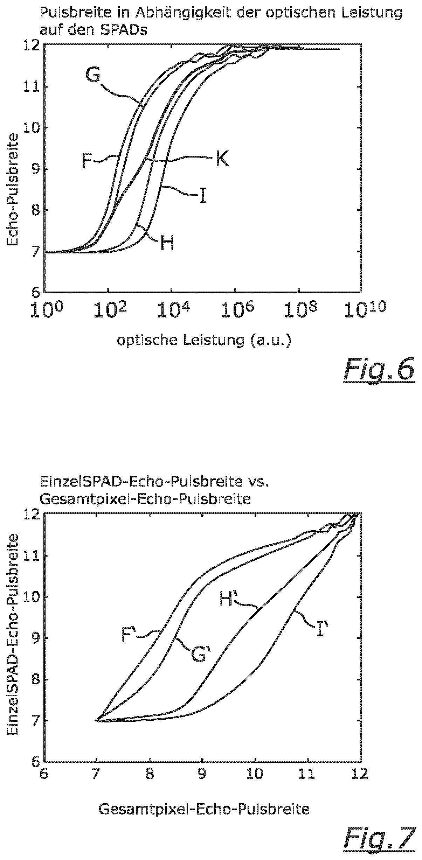

Im nächsten Schritt wird die distanzabhängige Funktion der Gesamtpeakbreite des Datenpunkts von der optischen Leistung bestimmt. Diese ist in Fig. 6 gezeigt als Kurve K. Sie ergibt sich in Abhängigkeit der distanzabhängigen Funktionen F, G, H, I der jeweiligen Peakbreiten von der optischen Leistung der Detektorelemente, die dem Datenpunkt zugeordnet sind. Die Gesamtpulsbreite K hängt von der konkreten Architektur des Datenpunkts ab, also davon, wie die einzelnen Detektorelemente angeordnet sind. Im vorliegenden Beispiel werden die Peakbreiten der Detektorelemente additiv kombiniert, wodurch sich die Gesamtpulsbreite K des Datenpunkts aus den gemittelten Pulsbreiten, die jeweils mit den zugehörigen Peakhöhen gewichtet werden, ergibt.

Auf Basis dieser Funktionen wird die zweite Tabelle erstellt.

**In** einem weiteren Schritt werden die Funktionen der Peakbreiten **F, G, H,** I aus Fig. 6 in Bezug zu der Gesamtpeakbreite K gesetzt. Dies ist in Fig. 7 dargestellt. Es ergeben sich die auf die Gesamtpeakbreite des Datenpunkts bezogenen distanzabhängigen Funktionen der Peakbreiten der vier Detektorelemente in Form der Kurven F', G', H' und I'.

Eine beispielhafte aus Fig. 6 beziehungsweise Fig. 7 abgeleitete zweite Tabelle hat folgenden Aufbau:

**2. Tabelle**

| | Gesamtpeakbreite | 7 | 8 | 10 | 12 |
|---|---|---|---|---|---|
| Distanz | | | | | |
| 0m | | [7,7,7,7] | [8,8,8,8] | [10,10,10,10] | [12,12,12,12] |
| 10m | | [7,7,7,7] | [7,7.5,10,7.5] | [8,9,12,9] | [12,12,12,12] |
| 20m | | [7,7,7,7] | [7,8,9,10] | [8,9,10.5,12] | [12,12,12,12] |
| 30m | | [7,7,7,7] | [7,8,8.5.8.5] | [8.5,9,11,11] | [12,12,12,12] |
| 40m | | [7,7,7,7] | [7.5,8.5,8.5,7.5] | [9.5,10.5,10.5,9.5] | [12,12,12,12] |
| 50m | | [7,7,7,7] | [7,8.5,8.5,7] | [9,11,11,9] | [12,12,12,12] |

Auch hier handelt es sich wieder um eine 2D-Nachschlagetabelle, die einer Gesamtpeakbreite und einer Distanz eines Datenpunkt-Peaks die Einzelpeakbreiten der EinzelSPADs zuordnet. Gemäß einer Weiterbildung wird zwischen den einzelnen Werten der Tabelle zweidimensional interpoliert, wodurch sich die Distanzgenauigkeit noch weiter verbessert.

Die oben aufgeführten Schritte werden für mehrere Distanzen wiederholt, so dass für jede der kalibrierten Distanzen eine Zeile in der Look-up Table für den späteren Normalbetrieb des Laufzeitsensors vorliegt.

In einer weiteren Ausführungsform erfolgt das Erstellen der ersten und/oder zweiten Tabelle jeweils zusätzlich unter Berücksichtigung eines von einem Datenpunkt weiter umfassten Gesamtrauschwerts.

In dieser Weiterbildung werden statt der oben dargestellten ersten und zweiten Tabelle, die jeweils in 2D ausgeführt sind und die jeweils einer groben Distanz und einer Gesamtintensität, also einer Gesamtpeakhöhe, eines Datenpunkts die jeweiligen Einzelintensitäten, also Einzelpeakbreiten, der Detektorelemente, oder auf Basis der groben Distanz einer Gesamtpulsbreite eines Datenpunkts Einzelpeakbreiten der Detektorelemente zuordnet, jeweils eine dreidimensionale Tabelle verwendet. Als dritte Dimension wird hier der Gesamtrauschwert des Datenpunkts, der ein Maß für den Rauschboden darstellt, verwendet. Dies ist besonders vorteilhaft, wenn der Empfänger des Laufzeitsensors stark rauschabhängig ist, insbesondere wenn die in der ersten und zweiten Tabelle abgebildete Abhängigkeit der Gesamtpeakbreite bzw. Gesamtpeakhöhe von den Peakbreiten bzw. Peakhöhen der einzelnen Detektorelemente zudem stark rauschabhängig ist. Andernfalls wird davon ausgegangen, dass Detektorelemente eines Datenpunkts dem gleichen Rauschen unterliegen, wenn sie das gleiche Ziel vermessen, so dass im Normalfall die dritte Dimension für die erste und zweite Tabelle nicht erforderlich ist.

In einer Weiterbildung erfolgt das Ermitteln jeweils der distanzabhängigen Einzeldistanzkorrekturwerte für die Detektorelemente eines jeweiligen Datenpunkts und das Bereitstellen des Gesamtdistanzkorrekturwerts für den jeweiligen Datenpunkt unter Verwendung einer vierten Tabelle.

Beispielsweise wird die vierte Tabelle auf Basis der dritten Tabelle erstellt, welche für diese Weiterbildung um eine Dimension erweitert wird, nämlich um die für den Datenpunkt ursprünglich bestimmte Distanz. Die Berechnung des Gesamtdistanzkorrekturwerts kann vorweg noch in der Kalibrationsphase erfolgen gemäß der oben beschriebenen Vorgehensweise. Auch hier kann die Kalibrierung mit einem vertretbaren Zeitaufwand anhand einfacher Messungen und automatisierter Berechnungen erfolgen. Es ist nicht erforderlich, für jede Distanz einzeln eine Tabelle für die Walk-Error-Korrektur einzumessen und eine entsprechende Look-up Table zu kalibrieren. Des Weiteren erfordert diese Weiterbildung besonders wenig Rechenaufwand zur Laufzeit.

Weiterer Gegenstand der Erfindung ist ein Laufzeitsensor, welcher gemäß einer Ausführungsform eine Sendeeinheit, eine Empfangseinheit und eine Auswerteeinheit aufweist, die untereinander verbunden sind. Die Sendeeinheit umfasst eine Lichtquelle, insbesondere eine Laserdiode, und ist zum Aussenden eines Sendesignals, insbesondere eines Lichtstrahlts in gepulster Form, eingerichtet. Die Empfangseinheit umfasst mehrere lichtsensitive Detektorelemente, die jeweils eine Fotodiode, insbesondere eine Lawinenfotodiode oder eine Einzelphotonen-Lawinenfotodiode, umfassen. Die Detektorelemente sind jeweils zum Empfangen eines von einer Szene reflektierten Echosignals eingerichtet. Die Auswerteeinheit ist dazu eingerichtet, mindestens ein Einzelbild einer Szene zu erzeugen, wobei ein Datenpunkt des Einzelbildes einen Distanzwert, eine Gesamtpeakhöhe und eine Gesamtpeakbreite umfasst, welche jeweils durch mindestens zwei dem Datenpunkt zugeordnete Detektorelemente ermittelt sind. Die Auswerteeinheit ist zudem dazu eingerichtet, für mehrere Datenpunkte, bevorzugt für jeden Datenpunkt, des Einzelbildes mindestens zwei Einzelpeakhöhen in Abhängigkeit der Gesamtpeakhöhe und des Distanzwerts des jeweiligen Datenpunkts zu ermitteln und mindestens zwei Einzelpeakbreiten in Abhängigkeit der Gesamtpeakbreite und des Distanzwerts des jeweiligen Datenpunkts zu ermitteln. Des Weiteren ist die Auswerteeinheit dazu eingerichtet, für mehrere Datenpunkte, bevorzugt für jeden Datenpunkt, des Einzelbildes einen distanzabhängigen Einzeldistanzkorrekturwert für ein, bevorzugt für jedes, Detektorelement auf Basis der Einzelpeakhöhe oder auf Basis der Einzelpeakhöhe und der Einzelpeakbreite zu ermitteln und einen Gesamtdistanzkorrekturwert als Funktion der Einzeldistanzkorrekturwerte für den jeweiligen Datenpunkt bereitzustellen.

Der erfindungsgemäße Laufzeitsensor ermittelt für mehrere, bevorzugt für alle, Datenpunkte eines Einzelbildes einen Korrekturwert für die ursprünglich gemessene Distanz unter Berücksichtigung der Architektur der Empfangseinheit, bei der jeweils mindestens zwei Detektorelemente, insbesondere deren Ausgangssignale, zu einem Datenpunkt zusammengefasst sind. Ein durch diese Architektur, insbesondere eine Parallaxe, hervorgerufener systematischer Messfehler, auch bezeichnet als Walk Error, der zudem distanzabhängig ist, wird mit dem Gesamtdistanzkorrekturwert kompensiert bzw. korrigiert, indem für jedes Detektorelement auf Basis der Einzelpeakhöhe und Einzelpeakbreite ein Einzeldistanzkorrekturwert ermittelt wird. Die Distanzgenauigkeit des Laufzeitsensors wird dadurch verbessert.

Der Laufzeitsensor kann auch als Time-of-Flight-Sensor bezeichnet und als LiDAR-Sensor ausgeführt werden. Besonders deutlich werden die Vorteile der beschriebenen Erfindung bei LiDAR-Sensoren, bei denen ein Pixel oder Datenpunkt aus mehreren SPADs oder APDs zusammengesetzt ist, und die demzufolge eine starke Parallaxe aufweisen, wenn also beispielsweise eine Verschiebung von mehr als der halben Größe des Detektorelements bei dem empfangenen Echosignal auftritt.

Im Übrigen gelten für den Laufzeitsensor die obigen Ausführungen zum erfindungsgemäßen Verfahren zum Bereitstellen mindestens eines Korrekturwerts für ein Ausgabedistanzbild entsprechend, insbesondere hinsichtlich Vorteilen und Ausführungsformen.

In einer möglichen Implementierung ist der erfindungsgemäße Laufzeitsensor dazu eingerichtet, das oben beschriebene Verfahren auszuführen.

Weiterer Gegenstand der Erfindung ist ein Computerprogammprodukt, das ein computerlesbares Speichermedium umfasst, auf welchem ein Programm gespeichert ist, welches es einem Computer ermöglicht, nach Einlesen des Programms in einen Speicher des Computers das oben beschriebene Verfahren zum Bereitstellen mindestens eines Korrekturwerts für ein Ausgabedistanzbild eines Laufzeitsensors auszuführen. Dieses insbesondere in Zusammenwirken mit dem oben beschriebenen Laufzeitsensor.

Die hier jeweils beschriebenen Ausführungsformen können untereinander kombiniert werden, sofern es sich nicht explizit anders ergibt oder beschrieben ist.

Die Erfindung wird rein beispielhaft unter Bezugnahme auf die Figuren weiter erläutert. Es zeigen:
- Fig. 1a bis 1c: jeweils ein Diagramm des Verhältnisses der optischen Leistung auf den Detektorelementen in einer bestimmten Distanz,
- Fig. 2: ein beispielhaftes Diagramm der Peakhöhe eines Detektorelements bezogen auf die relative optische Leistung,
- Fig. 3: ein beispielhaftes Diagramm der Peakhöhe der einzelnen Detektorelemente im Vergleich zur Gesamtpeakhöhe eines Datenpunkts,
- Fig. 4: eine beispielhaftes Diagramm der auf die Gesamtpeakhöhe normierten Peakhöhen aus Fig. 3,
- Fig. 5: ein beispielhaftes Diagramm der Peakbreite eines Detektorelements bezogen auf die relative optische Leistung,
- Fig. 6: ein beispielhaftes Diagramm der Peakbreiten der Detektorelemente eines Datenpunkts im Vergleich zur Gesamtpeakbreite des Datenpunkts,
- Fig. 7: eine beispielhaftes Diagramm der auf die Gesamtpeakbreite normierten Peakbreiten aus Fig. 6, und

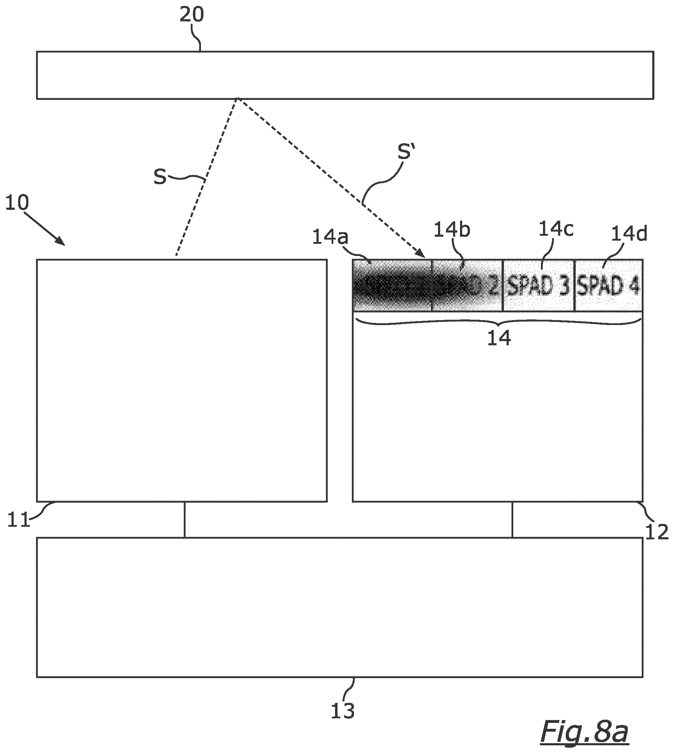

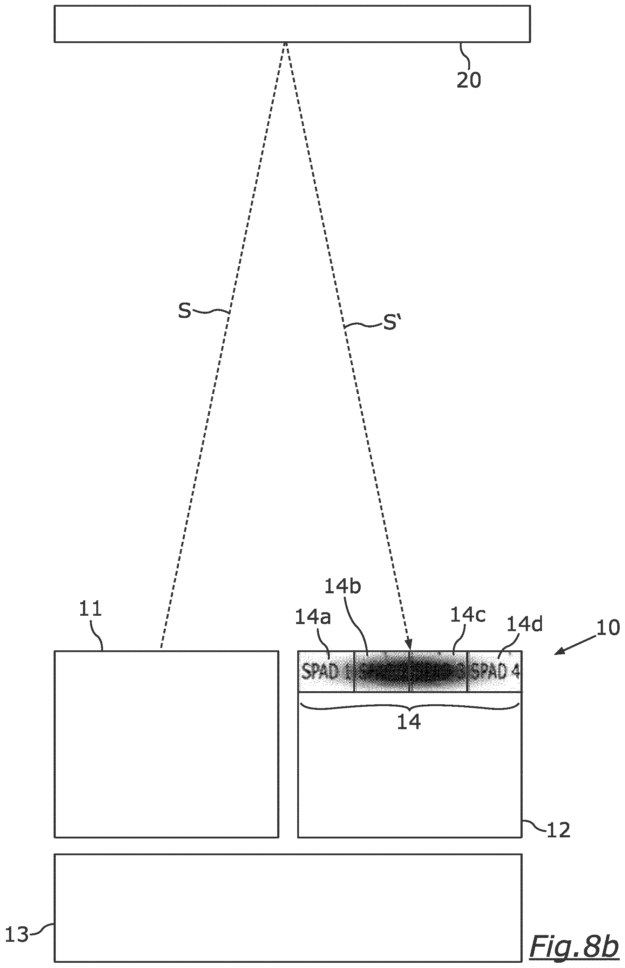

- Fig. 8a und 8b: jeweils eine beispielhafte Ausführungsform des Laufzeitsensors wie vorgeschlagen.

Bezüglich der Fig. 1 bis 7 wird auf die Beschreibung weiter oben verwiesen.

Fig. 8a zeigt eine erste beispielhafte Ausführungsform des erfindungsgemäßen Laufzeitsensors 10. Dieser umfasst die Sendeeinheit 11, die Empfangseinheit 12, sowie die Auswerteeinheit 13. Beispielhaft ist in der Empfangseinheit 12 ein Datenpunkt oder Pixel 14 gezeigt, welcher bzw. welches in diesem Beispiel aus vier Detektorelementen 14a, 14b, 14c und 14d gebildet wird. Die von den Detektorelementen 14a bis 14d bereitgestellten Ausgangssignale werden also in dem Datenpunkt 14 zusammengefasst. Ein von dem Laufzeitsensor erzeugtes Distanzbild besteht aus einer Vielzahl derartiger Datenpunkte 14. Jeder Datenpunkt 14 kann in anderen Ausführungsformen des Laufzeitsensors auch mehr oder weniger als die in diesem Beispiel angegebenen vier Detektorelemente umfassen.

In Fig. 8a befindet sich das Ziel, oder Target, oder Objekt 20 in kurzer Distanz zum Laufzeitsensor, so dass wie in der Figur angedeutet aufgrund der Parallaxe das Echosignal S' hauptsächlich bei den Detektorelementen 14a und 14b auftrifft. Dadurch werden in diesen Detektorelementen beispielsweise größere Peakhöhen detektiert.

Im Vergleich zur Fig. 8a ist das Target 20 in Fig. 8b weiter vom Laufzeitsensor 10 entfernt. Folglich wird das Echosignal S' von den Detektorelementen 14b und 14c mit hoher Intensität empfangen, wohingegen die Detektorelemente 14a und 14d geringere Peakhöhen detektieren.

Der hier verdeutlichte Effekt der Parallaxe, welcher zu einem distanzabhängigen Walk Error führt, wird durch das oben beschriebene Verfahren sowie den erfindungsgemäßen Laufzeitsensor mit Vorteil kompensiert.

### Bezugszeichenliste

- 10: Laufzeitsensor
- 11: Sendeeinheit
- 12: Empfangseinheit
- 13: Auswerteeinheit
- 14: Datenpunkt
- 14a, 14b, 14c, 14d: Detektorelement
- 20: Objekt
- S: Sendesignal
- S': Echosignal
- A, B, C, D, E: Funktion
- B', C', D', E': Funktion
- F, G, H, I, K: Funktion
- F', G', H', I': Funktion

## Patentansprüche

1. Verfahren zum Bereitstellen mindestens eines Korrekturwerts für ein Ausgabedistanzbild eines Laufzeitsensors (10) aufweisend folgende Schritte:
Zuführen eines Einzelbildes, wobei ein, bevorzugt jeder, Datenpunkt (14) des Einzelbildes einen Distanzwert, eine Gesamtpeakhöhe und eine Gesamtpeakbreite umfasst, die jeweils aus einem von dem Laufzeitsensor (10) empfangenen Echosignal (S') durch mindestens zwei Detektorelemente (14a, 14b) ermittelt wurden,
für mehrerer Datenpunkte, bevorzugt für jeden Datenpunkt (14), des Einzelbildes Ermitteln von mindestens zwei Einzelpeakhöhen in Abhängigkeit der Gesamtpeakhöhe und des Distanzwerts des jeweiligen Datenpunkts und Ermitteln von mindestens zwei Einzelpeakbreiten in Abhängigkeit der Gesamtpeakbreite und des Distanzwerts des jeweiligen Datenpunkts, für mehrerer Datenpunkte, bevorzugt für jeden Datenpunkt (14), des Einzelbildes Ermitteln jeweils eines distanzabhängigen Einzeldistanzkorrekturwerts für eines, bevorzugt für jedes, Detektorelement (14a, 14b) auf Basis der Einzelpeakhöhe oder auf Basis der Einzelpeakhöhe und der Einzelpeakbreite und Bereitstellen eines Gesamtdistanzkorrekturwerts des jeweiligen Datenpunkts als Funktion der Einzeldistanzkorrekturwerte.

2. Verfahren nach Anspruch 1,
wobei die Gesamtpeakbreite eines, bevorzugt eines jeden, Datenpunkts (14) eine Funktion mindestens zweier Peakbreiten, die von den mindestens zwei Detektorelementen (14a, 14b) des Laufzeitsensors, die dem jeweiligen Datenpunkt (14) zugeordnet sind, aus dem Echosignal detektiert wurden, ist, und
wobei die Gesamtpeakhöhe eines, bevorzugt eines jeden, Datenpunkts (14) eine Funktion mindestens zweier Peakhöhen, die von den mindestens zwei Detektorelementen (14a, 14b) des Laufzeitsensors, die dem jeweiligen Datenpunkt zugeordnet sind, aus dem Echosignal detektiert wurden, ist.

3. Verfahren nach Anspruch 1 oder 2,
wobei das Ermitteln der mindestens zwei Einzelpeakhöhen in Abhängigkeit der Gesamtpeakhöhe und des Distanzwerts des jeweiligen Datenpunkts (14) auf Basis einer ersten Tabelle erfolgt, und
wobei das Ermitteln der mindestens zwei Einzelpeakbreiten in Abhängigkeit der Gesamtpeakbreite und des Distanzwerts des jeweiligen Datenpunkts (14) auf Basis einer zweiten Tabelle erfolgt, und
wobei jedem Detektorelement (14a, 14b) des jeweiligen Datenpunkts (14) eine ermittelte Einzelpeakhöhe und eine ermittelte Einzelpeakbreite zugeordnet wird.

4. Verfahren nach einem der vorstehenden Ansprüche,
wobei der Gesamtdistanzkorrekturwert des jeweiligen Datenpunkts (14) als Mittelwert der Einzeldistanzkorrekturwerte, bevorzugt als gewichteter Mittelwert der Einzeldistanzkorrekturwerte, besonders bevorzugt als nach den Einzelpeakhöhen oder Einzelpeakbreiten gewichteter Mittelwert der Einzeldistanzkorrekturwerte, bereitgestellt wird.

5. Verfahren nach einem der vorstehenden Ansprüche,
wobei das Ermitteln des jeweiligen distanzabhängigen Einzeldistanzkorrekturwerts für das jeweilige Detektorelement (14a, 14b) auf Basis der Einzelpeakhöhe oder auf Basis der Einzelpeakhöhe und der Einzelpeakbreite unter Verwendung einer dritten Tabelle erfolgt.

6. Verfahren nach einem der vorstehenden Ansprüche,
wobei genau ein Einzeldistanzkorrekturwert für die mindestens zwei Detektorelemente (14a, 14b) ermittelt wird, sofern sich die mindestens zwei ermittelten Einzelpeakhöhen eines Datenpunkts (14) nicht wesentlich unterscheiden.

7. Verfahren nach einem der vorstehenden Ansprüche,
weiter aufweisend
Erfassen einer jeweiligen Stärke des Umgebungsrauschens durch eines, bevorzugt jedes, Detektorelement (14a, 14b) des jeweiligen Datenpunkts (14),
wobei die jeweils erfasste Stärke des Umgebungsrauschens beim Ermitteln des jeweiligen Einzeldistanzkorrekturwerts zusätzlich herangezogen wird.

8. Verfahren nach einem der vorstehenden Ansprüche,
weiter aufweisend folgende Schritte, die vorab für mehrere, bevorzugt für alle, einem Datenpunkt (14) zugeordneten Detektorelemente (14a, 14b) und für mehrerer Datenpunkte, bevorzugt für jeden Datenpunkt (14), durchgeführt werden:
Bestimmen jeweils eines Einzeldistanzkorrekturwerts für eine von dem Detektorelement (14a, 14b) ermittelte Peakhöhe und Peakbreite und Erstellen der dritten Tabelle, die einer jeweiligen erfassten Kombination von Peakhöhe und Peakbreite den bestimmten Einzeldistanzkorrekturwert zuordnet.

9. Verfahren nach einem der vorstehenden Ansprüche,
weiter aufweisend folgende Schritte, die vorab für mehrere, bevorzugt für alle, einem Datenpunkt (14) zugeordneten Detektorelemente (14a, 14b) durchgeführt werden:
Bestimmen jeweils eines distanzabhängigen Faktors, der einer Abhängigkeit der ermittelten Peakhöhe von der optischen Leistung bezogen auf eine Position des jeweiligen Detektorelements im Verhältnis zur Position mindestens eines zweiten Detektorelements desselben Datenpunkts (14) entspricht,
Bestimmen einer distanzunabhängigen Funktion der ermittelten Peakhöhe von der optischen Leistung,
Ermitteln einer distanzabhängigen Funktion der ermittelten Peakhöhe von der optischen Leistung durch Multiplikation der jeweiligen bestimmten distanzunabhängigen Funktion mit dem distanzabhängigen Faktor,
und weiter aufweisend folgende Schritte, die vorab für mehrerer Datenpunkte, bevorzugt für jeden Datenpunkt (14), durchgeführt werden:
Ermitteln einer distanzabhängigen Funktion der Gesamtpeakhöhe des jeweiligen Datenpunkts (14) von der optischen Leistung auf Basis der distanzabhängigen Funktionen der Peakhöhen von der optischen Leistung der dem jeweiligen Datenpunkt (14) zugeordneten Detektorelemente (14a, 14b), insbesondere durch Aufsummieren derselben, und
Erstellen der ersten Tabelle auf Basis der ermittelten distanzabhängigen Funktion der Gesamtpeakhöhe des jeweiligen Datenpunkts (14) von der optischen Leistung und der jeweiligen distanzabhängigen Funktion der Peakhöhe von der optischen Leistung eines jeden dem Datenpunkt (14) zugeordneten Detektorelements, wobei die erste Tabelle einer jeweiligen erfassten Kombination von Gesamtpeakhöhe und Distanzwert des jeweiligen Datenpunkts (14) jeweilige Einzelpeakhöhen der dem Datenpunkt (14) zugeordneten Detektorelemente (14a, 14b) zuordnet.

10. Verfahren nach einem der vorstehenden Ansprüche,
weiter aufweisend folgende Schritte, die vorab für mehrere, bevorzugt für alle, einem Datenpunkt (14) zugeordneten Detektorelemente (14a, 14b) durchgeführt werden:
Bestimmen jeweils eines distanzabhängigen Faktors, der einer Abhängigkeit der ermittelten Peakbreite von der optischen Leistung bezogen auf eine Position des jeweiligen Detektorelements im Verhältnis zur Position mindestens eines zweiten Detektorelements desselben Datenpunkts (14) entspricht,
Bestimmen einer distanzunabhängigen Funktion der ermittelten Peakbreite von der optischen Leistung,
Bestimmen einer distanzabhängigen Funktion der ermittelten Peakbreite von der optischen Leistung durch Multiplikation der jeweiligen bestimmten distanzunabhängigen Funktion mit dem distanzabhängigen Faktor, und weiter aufweisend folgende Schritte, die vorab für mehrere Datenpunkte, bevorzugt für jeden Datenpunkt (14), durchgeführt werden:
Ermitteln einer distanzabhängigen Funktion der Gesamtpeakbreite des jeweiligen Datenpunkts von der optischen Leistung in Abhängigkeit der distanzabhängigen Funktion der Peakbreite von der optischen Leistung mehrerer, bevorzugt aller, dem jeweiligen Datenpunkt (14) zugeordneten Detektorelemente (14a, 14b) und
Erstellen der zweiten Tabelle auf Basis der ermittelten distanzabhängigen Funktion der Gesamtpeakbreite des jeweiligen Datenpunkts (14) von der optischen Leistung und der jeweiligen distanzabhängigen Funktion der Peakbreite von der optischen Leistung mehrerer, bevorzugt aller, dem jeweiligen Datenpunkt (14) zugeordneten Detektorelemente (14a, 14b), wobei die zweite Tabelle einer jeweiligen erfassten Kombination von Gesamtpeakbreite und Distanzwert des jeweiligen Datenpunkts jeweilige Einzelpeakbreiten der dem Datenpunkt (14) zugeordneten Detektorelemente (14a, 14b) zuordnet.

11. Verfahren nach Anspruch 9 oder 10,
wobei das Erstellen der ersten und/oder zweiten Tabelle jeweils zusätzlich unter Berücksichtigung eines von einem jeweiligen Datenpunkt (14) weiter umfassten Gesamtrauschwerts erfolgt.

12. Verfahren nach einem der vorstehenden Ansprüche,
wobei das Ermitteln jeweils der distanzabhängigen Einzeldistanzkorrekturwerte für die Detektorelemente (14a, 14b) eines jeweiligen Datenpunkts (14) und das Bereitstellen des Gesamtdistanzkorrekturwerts für den jeweiligen Datenpunkt unter Verwendung einer vierten Tabelle erfolgt.

13. Laufzeitsensor aufweisend
eine Sendeeinheit (11), eine Empfangseinheit (12) und eine Auswerteeinheit (13), die untereinander verbunden sind,
wobei die Sendeeinheit (11) eine Lichtquelle, insbesondere eine Laserdiode, umfasst, und zum Aussenden eines Sendesignals (S), insbesondere eines Lichtstrahls in gepulster Form, eingerichtet ist,
wobei die Empfangseinheit (12) mehrere lichtsensitive Detektorelemente (14a, 14b) umfasst, die jeweils eine Fotodiode, insbesondere eine Lawinenfotodiode oder eine Einzelphotonen-Lawinenfotodiode, umfassen, und jeweils zum Empfangen eines von einer Szene (20) reflektierten Echosignals (S') eingerichtet sind, und
wobei die Auswerteeinheit (13) dazu eingerichtet ist,
mindestens ein Einzelbild einer Szene zu erzeugen, wobei ein Datenpunkt (14) des Einzelbildes jeweils einen durch mindestens zwei dem Datenpunkt (14) zugeordnete Detektorelemente (14a, 14b) ermittelten Distanzwert, eine Gesamtpeakhöhe und eine Gesamtpeakbreite umfasst,
für mehrerer Datenpunkte, bevorzugt für jeden Datenpunkt (14), des Einzelbildes mindestens zwei Einzelpeakhöhen in Abhängigkeit der Gesamtpeakhöhe und des Distanzwerts des jeweiligen Datenpunkts (14) zu ermitteln und mindestens zwei Einzelpeakbreiten in Abhängigkeit der Gesamtpeakbreite und des Distanzwerts des jeweiligen Datenpunkts (14) zu ermitteln,
für mehrerer Datenpunkte, bevorzugt für jeden Datenpunkt (14), des Einzelbildes jeweils einen Einzeldistanzkorrekturwert für eines, bevorzugt für jedes, Detektorelement auf Basis der Einzelpeakhöhe oder auf Basis der Einzelpeakhöhe und der Einzelpeakbreite zu ermitteln und einen Gesamtdistanzkorrekturwert für den jeweiligen Datenpunkt (14) als Funktion der Einzeldistanzkorrekturwerte bereitzustellen.

14. Computerprogrammprodukt, das ein computerlesbares Speichermedium umfasst, auf welchem ein Programm gespeichert ist, das es einem Computer ermöglicht, nach Einlesen des Programms in einen Speicher des Computers das Verfahren gemäß einem der Ansprüche 1 bis 12 insbesondere im Zusammenwirken mit dem Laufzeitsensor gemäß Anspruch 13 auszuführen.
